(19) Europäisches Patentamt
European Patent Office
Office européen des brevets

(11) **EP 1 938 958 B1**

(12) **FASCICULE DE BREVET EUROPEEN**

(45) Date de publication et mention
de la délivrance du brevet:
**10.03.2010 Bulletin 2010/10**

(51) Int Cl.:
***B29D 30/16*** *(2006.01)* ***B29D 30/30*** *(2006.01)*
***B29C 70/38*** *(2006.01)* *B29D 30/70* *(2006.01)*

(21) Numéro de dépôt: **07118444.4**

(22) Date de dépôt: **15.10.2007**

(54) **Definition de l'angle d'ouverture des déflecteurs utilisés dans un guide fil recevant des fils projetés sur une surface**

Bestimmung des Öffnungswinkels der Leitbleche, die in einem Leitungsträger verwendet werden, der Kabel aufnimmt, die auf eine Fläche projiziert werden

Definition of the opening angle of the deflectors used in a wire guide receiving wires projected onto a surface

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **02.11.2006 FR 0609648**
**02.11.2006 FR 0609646**

(43) Date de publication de la demande:
**02.07.2008 Bulletin 2008/27**

(73) Titulaires:
• **Société de Technologie Michelin**
**63000 Clermont-Ferrand (FR)**
• **Michelin Recherche et Technique S.A.**
**1763 Granges-Paccot (CH)**

(72) Inventeurs:
• **Martin, Pascal**
**63730 Corent (FR)**
• **Cordaillat, Dominique**
**69126, Brindas (FR)**

(74) Mandataire: **Reynaud, Georges**
**Service SGD/LG/PI**
**F35 - Ladoux**
**23, place des Carmes-Dechaux**
**63040 Clermont-Ferrand Cedex 9 (FR)**

(56) Documents cités:
**EP-A1- 0 248 301    EP-A1- 0 845 348**

## Description

L'invention concerne en particulier la fabrication des pneumatiques, et se rapporte plus précisément à la fabrication d'armatures de renforcement.

Il est connu de l'état de la technique un procédé de fabrication dans lequel de tels renforcements sont fabriqués directement sur l'ébauche d'un pneumatique à partir d'un fil continu par projection dudit fil à la manière d'un fouet et non plus sous forme de nappes que l'on incorpore lors de l'assemblage du pneumatique.

Le terme fil doit être compris dans un sens tout à fait général, englobant un mono filament, un multi filament, un câblé ou un retors ou un assemblage équivalent, et ceci, quelle que soit la matière constituant le fil ou le traitement qu'il pourrait subir, par exemple un traitement de surface pour favoriser sa liaison intime avec du caoutchouc, voire encore un traitement de gommage entourant ledit fil d'une couche de caoutchouc pour permettre son adhésion directe sur le support lors de sa projection.

Un tel dispositif est décrit dans la publication EP 248 301, et la figure 1 illustre les organes principaux qui composent ce type d'appareil.

Le fil 1 est introduit dans le dispositif depuis une source d'alimentation (non représentée). L'appareil projette des tronçons de fil sur une surface de réception Q (non représentée) qui peut être formée indifféremment par le sommet d'une ébauche de pneumatique ou par un anneau de support séparé ou bien encore par une surface plane.

Ledit dispositif comprend :

- des moyens d'appel 11 de fil 1 à partir d'une source de fil,
- un conduit rotatif 2 fixé sur un arbre 20 constituant l'axe de rotation R dudit conduit, de manière telle que l'extrémité radiale extérieure 21 dudit conduit soit orientée sensiblement radialement par rapport à l'axe de rotation, ledit conduit recevant le fil 1 par son extrémité centrale 22 opposée à ladite extrémité radiale extérieure 21 en provenance desdits moyens d'appel, ledit fil sortant par ladite extrémité radiale extérieure, lesdits moyens d'appel contrôlant la vitesse linéaire d'avance du fil à l'intérieur dudit conduit rotatif,
- des moyens pour entraîner en rotation ledit conduit rotatif autour d'un axe R,
- des moyens (non représentés) pour sectionner le fil agissant sur le fil de façon à libérer un tronçon à chaque tour dudit conduit rotatif.

Ce dispositif peut comprendre en outre un guide fil 4, pour recevoir et guider des tronçons de fil, comme cela est décrit dans la publication EP 248 301, ou encore dans les publications EP 845 348 et EP 845 349.

Aussi, pour plus de détails sur l'agencement des dispositifs du type connu, il est suggéré de consulter les publications susmentionnées.

L'invention concerne plus particulièrement le guide fil, et le mode d'agencement du guide fil par rapport au moyen de projection du fil. Selon l'état de la technique, le guide fil a pour fonction d'imposer une trajectoire précise au tronçon de fil avant que ce dernier n'« atterrisse » sur la surface de réception Q. Pendant sa course libre, le tronçon de fil pénètre dans le guide fil de manière à ajuster sa course finale avant d'être projeté sur la surface de réception.

L'invention a pour objet un guide fil dans lequel les caractéristiques géométriques sont optimisées de manière à assurer le guidage optimal du fil en direction de la surface de réception.

L'invention se réfère donc à un dispositif de fabrication d'un renforcement à partir d'un fil déposé directement à sa place finale en projetant des tronçons dudit fil sur une surface de réception, comme défini dans la revendication 1.

L'invention se réfère aussi à l'utilisation dudit dispositif pour la fabrication d'un pneumatique, comme défini dans la revendication 14.

Des formes avantageuses de l'invention font l'objet des revendication dépendantes.

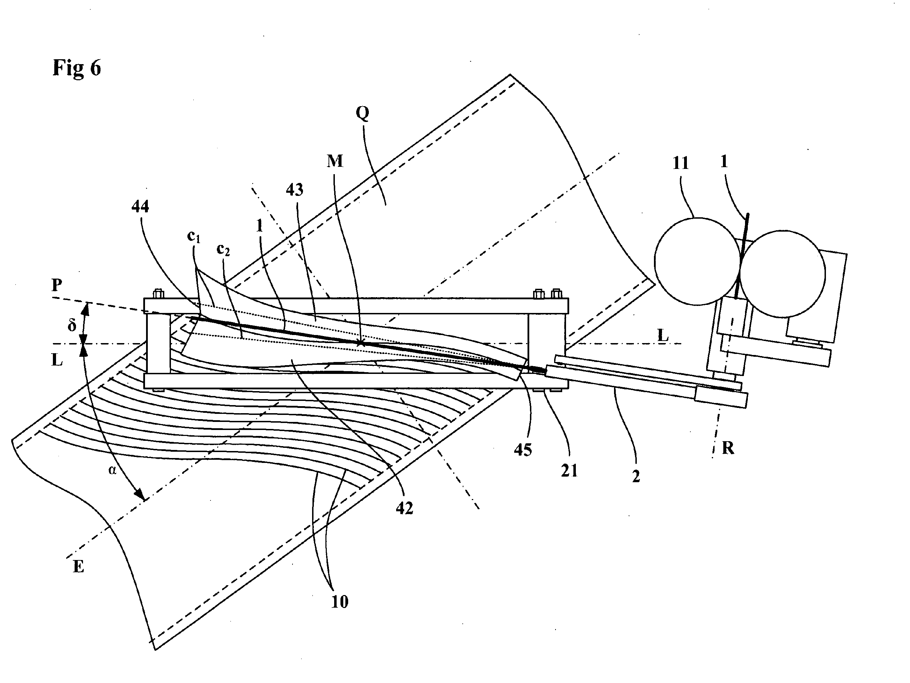

Les détails de l'invention sont exposés dans la description qui suit en s'appuyant sur les figures 1 à 6 dans lesquelles :

- la figure 1, déjà mentionnée, montre une vue schématique en perspective d'un moyen de pose et d'un guide fil concerné par l'invention,
- la figure 2 montre une vue schématique en coupe d'un guide sur laquelle sont indiqués les principaux paramètres géométriques susceptibles d'influencer la qualité de pose,
- la figure 3 est une vue schématique de dessus d'un dispositif de pose,
- la figure 4 montre une vue schématique de dessus d'une surface de réception sur laquelle ont été déposés des tronçons de fil selon un mode particulier de réalisation,
- la figure 5 montre une vue schématique de dessus d'un guide fil apte à guider des fils selon ledit mode particulier de réalisation,
- la figure 6 montre une vue schématique de dessus permettant de visualiser l'agencement particulier de la surface de réception, du guide fil et de l'appareil de pose dans le cas dudit mode particulier de réalisation.

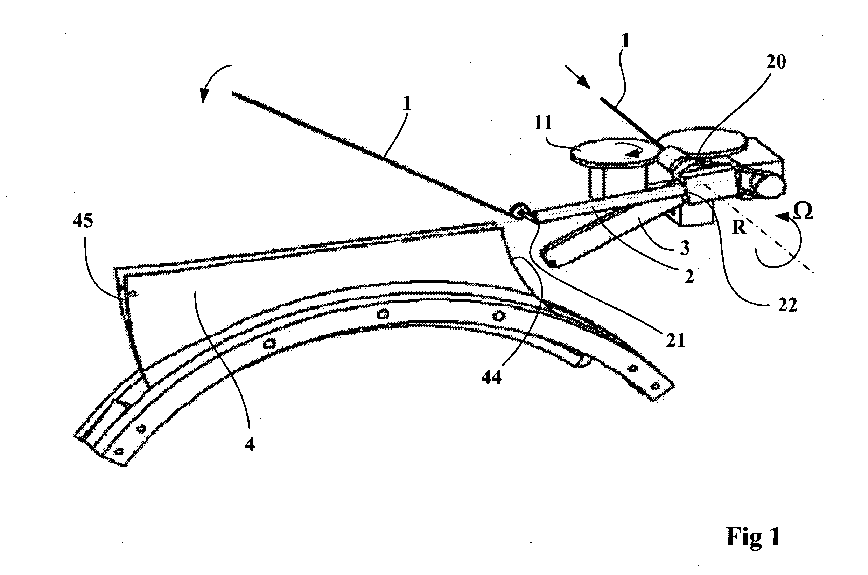

Le guide fil, représenté à la figure 1, est composé de deux déflecteurs positionnés par rapport au conduit rotatif de façon à recevoir le tronçon de fil dans le plan de rotation du conduit rotatif. Le plan de rotation du conduit rotatif est repéré par la lettre P. Les deux déflecteurs, délimitent un dégagement intérieur allongé, placé dans ledit plan de rotation P et sont agencés de façon à dégager entre eux une fente comportant un orifice d'entrée et un orifice de projection au travers desquels le tronçon de fil peut passer en direction de la surface de réception Q, et sont disposés de manière à ce que l'écartement entre chaque déflecteur aille en se rétrécissant au fur et à mesure que l'on se rapproche de l'orifice de projection.

Chaque déflecteur peut comporter du coté de l'orifice de projection une bordure incurvée de façon à approcher la surface de réception.

Il est également possible de faire en sorte que les deux déflecteurs soient en contact l'un de l'autre au moins ponctuellement du coté de l'orifice de projection. Dans ces conditions il est nécessaire de disposer de moyens pour régler la pression exercé par lesdits déflecteurs l'un en direction de l'autre au passage du tronçon de fil, et de faire en sorte que lesdits déflecteurs puissent s'esquiver au passage dudit tronçon de fil.

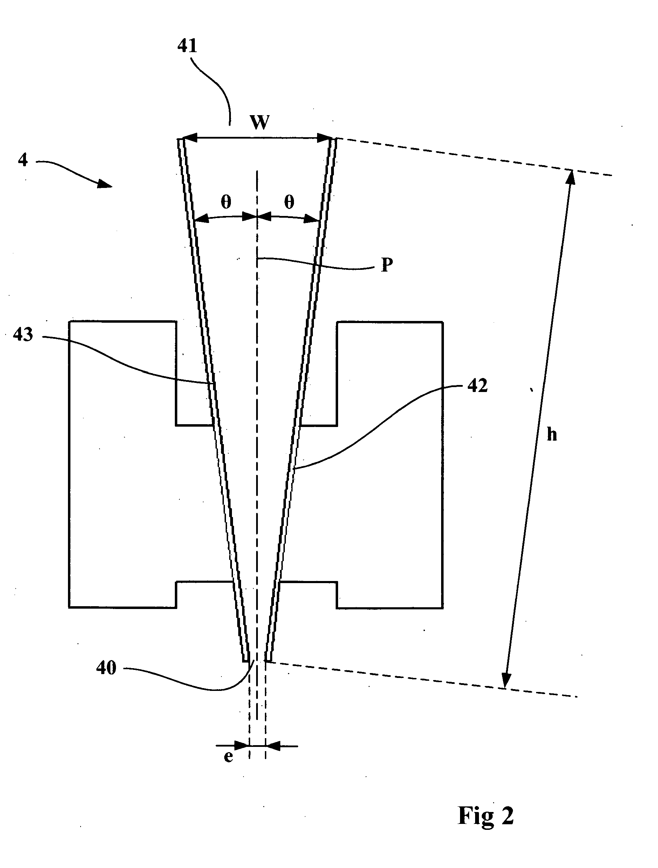

La figure 2, qui montre une vue en coupe d'un guide fil du type concerné par l'invention, permet de visualiser les positions respectives des deux déflecteurs 42 et 43, disposés par rapport au plan P selon un angle d'ouverture θ donné. Le tronçon de fil pénètre par l'ouverture 41 et ressort par l'orifice de projection 40. La mesure de l'écartement entre les déflecteurs au niveau de l'ouverture 41 prend la valeur W et la mesure de l'écartement au niveau de l'orifice de projection 40 prend la valeur e. La mesure de la hauteur des parois des déflecteurs prend la valeur h. La mesure de la longueur du tronçon de fil prend la valeur L.

Dans la direction longitudinale, le guide fil est orienté sensiblement dans la direction radiale du conduit 2, lorsque ledit conduit est dans la configuration angulaire coïncidant précisément au moment où s'effectue la libération du tronçon de fil. Le guide fil a une extrémité conventionnellement nommée radialement interne 44 qui est la partie du guide fil la plus proche de l'extrémité 21 du conduit 2, et une extrémité radialement externe 45 qui est la partie la plus éloignée radialement de l'extrémité 21 du conduit 2.

L'objet de l'invention concerne la détermination des caractéristiques géométriques du guide fil, parmi lesquelles le choix de l'angle θ et de la hauteur h doit être fait avec un soin particulier de manière à obtenir un résultat satisfaisant.

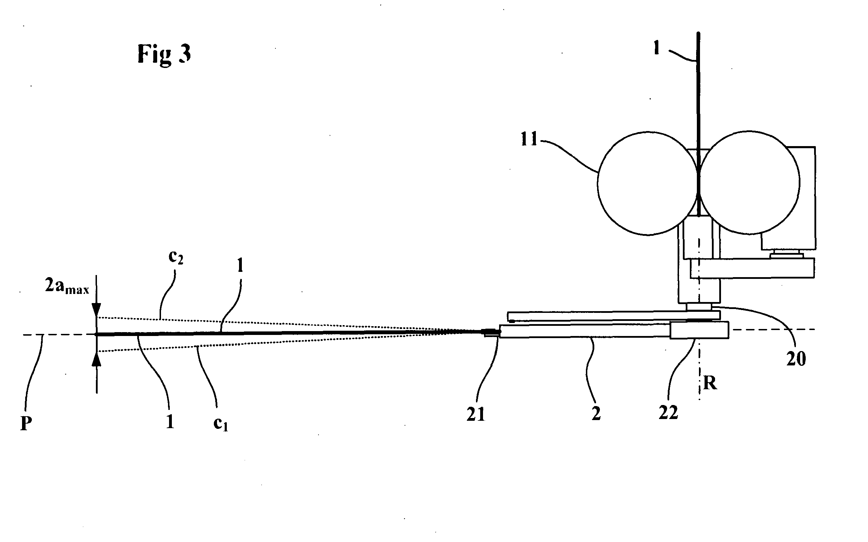

En effet, il a été mis en évidence de façon expérimentale que, contrairement à ce qui avait été décrit dans les publications citées précédemment, le fil et le tronçon de fil ne se déplacent pas rigoureusement dans le plan P. Ainsi il s'est avéré que le fil 1 oscille de part et d'autre du plan P, et que l'amplitude a de cette oscillation augmente lorsque l'on se déplace radialement vers la partie du tronçon de fil la plus éloignée de la sortie 21 du conduit 2, comme cela est représenté à la figure 3. A l'extrémité du fil, la valeur maximale de l'amplitude de cette oscillation est notée $a_{max}$. De plus, l'oscillation augmente lorsque la longueur du fil augmente, et la valeur de $a_{max}$ est donc maximale juste avant la coupe du fil et le début du parcours libre du tronçon de fil. Le fil oscille de part et d'autre du plan P dans les limites $C_1$ et $C_2$ représentées en pointillé à la figure 3.

La valeur de cette amplitude maximale dépend tout à la fois de la nature du fil, de la longueur du tronçon de fil et de la vitesse de rotation Ω du conduit 2. A titre indicatif on mesure une amplitude $a_{max}$ de l'ordre de +/- 5 mm pour un tronçon de fil de type 9-23 dissolutionné et d'une longueur de 450 mm. Pour un fil de même longueur, mais non dissolutionné, l'amplitude $a_{max}$ est de +/- 10 mm. De même, lorsque la longueur de ces deux fils est de 600 mm les amplitudes de l'oscillation sont respectivement de +/- 10 mm et de +/-15 mm.

Pour un fil 2+2-28 dissolutionné de 500 mm de longueur, l'amplitude $a_{max}$ est de +/-20 mm, et pour le même fil de même longueur mais non dissolutionné, l'amplitude de l'oscillation $a_{max}$ est de +/- 15 mm.

La mesure de cette oscillation s'effectue par exemple à l'aide de moyens utilisant des lumières stroboscopiques ou encore des moyens rapides d'enregistrement d'image.

Il convient donc de faire en sorte que la valeur W qui détermine l'ouverture du guide fil à un endroit donné le long de la direction longitudinale du guide fil soit supérieure à la valeur de l'amplitude de l'oscillation du fil ou du tronçon de fil pénétrant dans le guide fil à cet endroit, de manière à ce que le tronçon de fil pénètre dans le guide fil sans heurter la bordure supérieure du guide fil.

Aussi le choix des valeurs de l'angle d'ouverture θ et de la hauteur h des déflecteurs qui déterminent la valeur de l'ouverture doit se faire dans des plages de valeur très précises pour obtenir de bons résultats de pose.

Selon l'invention, il a été déterminé que la valeur de l'angle θ devait être comprise entre 3° et 7° d'angle, pour que le fil puisse être guidé dans le guide fil et franchir l'orifice de projection avec une vitesse suffisante pour être apte à fouetter la surface de réception afin d'y adhérer.

On observe en effet que, pour une valeur W donnée, une valeur de l'angle θ trop faible, et inférieure à 3°, oblige à augmenter la hauteur des déflecteurs, ce qui conduit à augmenter les frottements entre le tronçon de fil et les parois des déflecteurs. Il en résulte alors une perte d'énergie cinétique du tronçon de fil conduisant à une réduction de la vitesse dudit tronçon qui aura alors du mal, après avoir franchi l'orifice de projection, à venir adhérer efficacement sur la surface de réception Q.

A l'inverse, toujours pour une valeur W donnée, une valeur de l'angle θ trop élevée, a pour effet, d'engendrer des chocs entre la paroi des déflecteurs et le tronçon de fil, et de renvoyer ledit tronçon sur la paroi du déflecteur opposée, avec pour conséquence également une perte d'énergie cinétique du tronçon de fil conduisant comme précédemment à une adhésion insuffisante du fil sur la surface de réception Q.

Ainsi, le choix de la valeur angulaire de l'ouverture dans cette plage réduite comprise entre 3° et 7° permet de maîtriser la vitesse de fouettage du tronçon de fil sur toute sa longueur et par voie de conséquence permet de garantir la bonne adhésion dudit tronçon sur la surface de réception Q.

Connaissant la valeur de l'amplitude a de l'oscillation, bornée par les limites $C_1$ et $c_2$, il est alors possible de déterminer la valeur de la hauteur h des déflecteurs 42 et 43. En règle générale on cherchera à avoir une valeur h aussi faible que possible pour réduire les frottements ou les contacts entre le tronçon de fil et les parois des déflecteurs. Toutefois, en considérant les valeurs limites de l'angle θ, cette hauteur h ne peut pas être réduite inconsidérément sous peine d'avoir une valeur de l'ouverture W inférieure à la valeur de l'amplitude a de l'oscillation.

La relation ente ces grandeurs est obtenue par un calcul simple dans lequel on cherche à faire en sorte que $W \geq 2 * a$ et dans lequel $W = e + 2 * h * \sin \theta$, ce qui permet de déterminer la valeur inférieure de la hauteur h en chaque point du guide fil le long de sa direction longitudinale en fonction de la valeur de a et de l'angle d'ouverture θ; soit :

$$h \geq \frac{2 * a - e}{2 * \sin \theta}.$$

Ainsi, pour une valeur e égale à 4 mm, une valeur a de 20 mm et pour un angle θ de 3°, la hauteur h devra être supérieure à environ 350 mm et, pour les mêmes valeurs e et a, mais pour un angle d'ouverture θ de 7°, la hauteur h devra être supérieure à environ 150 mm.

On observera enfin que, dés lors que cette relation est observée, il est possible de faire varier la forme et la géométrie du guide fil en faisant en sorte d'optimiser la performance de la pose.

Comme cela a été dit ci-dessus, l'amplitude de l'oscillation du fil augmente au fur et à mesure que l'on s'éloigne de la sortie 21 du conduit, et cette amplitude $a_{max}$ est maximale à l'extrémité du fil la plus éloignée radialement de l'axe de rotation du conduit 2.

Il en résulte que, pour une même valeur de l'angle d'ouverture θ, on peut diminuer la valeur de la hauteur h au fur et à mesure que la valeur a de l'amplitude de l'oscillation diminue. En d'autres termes ceci autorise une construction du guide fil dans laquelle on augmente la hauteur des parois des déflecteurs lorsque l'on se déplace dans la direction longitudinale du guide fil depuis l'extrémité interne 44 vers l'extrémité externe 45.

Cette disposition s'avère particulièrement avantageuse en ce que l'énergie cinétique de la partie du tronçon de fil située radialement du coté de la sortie 21 du conduit 2 est plus faible que celle de la partie du tronçon radialement plus éloignée. En diminuant la hauteur des déflecteurs dans cette zone il est alors possible de réduire la dissipation d'énergie occasionnée par le passage dans le guide fil et d'optimiser les conditions de pose de cette partie du tronçon de fil.

Toujours dans le même ordre d'idée, il est aussi possible, pour une hauteur h de déflecteur donnée, de faire varier l'angle θ entre ses deux valeurs limites de 3° et 7°, ledit angle augmentant lorsque l'on se déplace dans la direction longitudinale du guide fil depuis l'extrémité interne 44 vers l'extrémité externe 45.

Enfin on peut encore imaginer de faire varier l'angle θ sur la hauteur du déflecteur en faisant en sorte d'avoir un angle θ relativement ouvert du coté de l'ouverture 41 et qui diminue au fur et à mesure que l'on se rapproche de l'orifice de projection 40. Cette disposition a pour objet d'améliorer la précision de pose. L'angle θ peut donc varier de 7° au niveau de l'ouverture à 3° au niveau de l'orifice de projection.

Bien évidemment la combinaison de ces choix techniques est également possible dés lors que l'angle θ d'ouverture et la hauteur des parois restent dans les limites énoncées dans les paragraphes qui précèdent. Il est ainsi possible d'avoir une hauteur h et un angle d'ouverture θ constants.

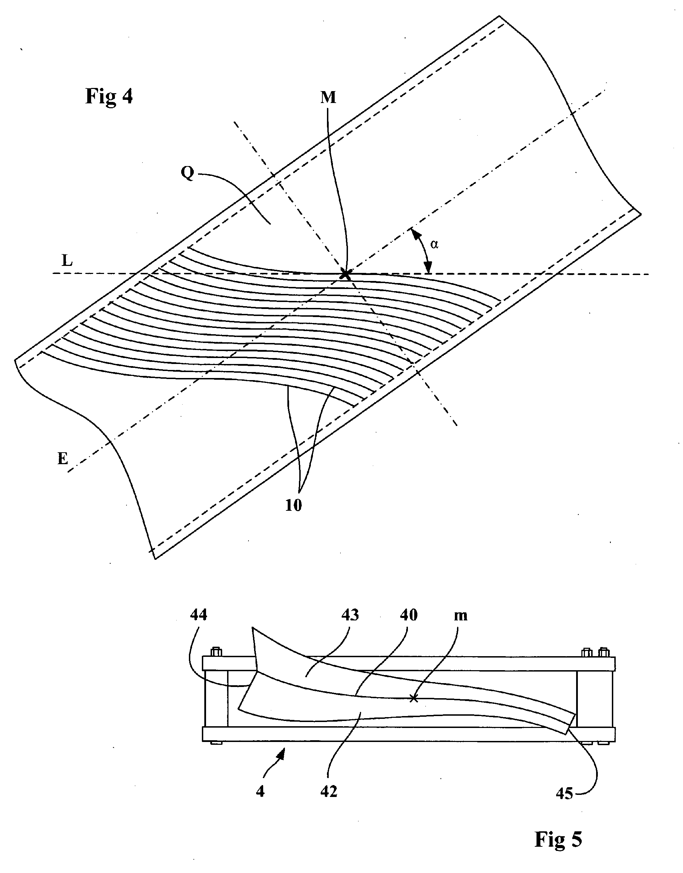

Une autre application de cette relation entre ces paramètres s'avère aussi particulièrement utile et concerne le cas de figure dans lequel on cherche à disposer les tronçons de fils 10 sur la surface de réception Q de part et d'autre d'une ligne L comme cela est illustré à la figure 4.

En règle générale, et contrairement à ce qui est illustré à la figure 4, on place les tronçons de fils sur la surface de réception Q en les disposant parallèlement les uns aux autres selon une direction sensiblement rectiligne. La ligne L, qui fait un angle α avec la direction longitudinale E de la surface de réception Q, et le tronçon de fil posé sont alors confondus. Lorsque la surface de réception est constituée par le sommet d'un pneumatique cet angle α correspond à l'angle de pose des renforts sommet. Comme cela est détaillé dans les publications citées en introduction, on s'arrange alors pour que d'une part l'orifice de projection 40 ait, dans sa direction longitudinale, une forme rectiligne, et que d'autre part que la trace du plan P dans lequel se déplace le conduit 2 sur la surface de réception Q fasse un angle α avec la direction longitudinale E et soit confondue avec la ligne L. Le plan de rotation P passe alors par l'orifice de projection 40.

Dans le cas particulier en question, chaque tronçon de fil 10 est tangent à la ligne L au niveau du point M, ledit point M étant l'intersection de la ligne longitudinale médiane E avec la ligne L. Le tronçon de fil une fois posé dessine une sorte de S de part et d'autre de la ligne L, ladite ligne faisant un angle α avec la ligne médiane E.

Il convient alors de prévoir un guide fil dont la forme longitudinale de l'orifice de projection 40 soit adaptée pour conférer au fil cette forme en S. La figure 5 illustre la vue de dessus d'un guide fil 4 de ce type, muni de ses deux déflecteurs 42 et 43. L'angle d'ouverture θ entre les déflecteurs est compris entre 3° et 7° comme cela a été expliqué précédemment. Le point du guide fil par lequel passe la zone du tronçon de fil destinée à « atterrir » au point M est noté m. Ce point m est situé sensiblement à équidistance des extrémités 44 et 45.

La longueur et la nature du tronçon de fil à poser permettent de déterminer l'amplitude $a_{max}$ de l'oscillation.

Le guide fil est alors positionné au dessus de la surface de réception Q, en première approche, de sorte que l'orifice de projection soit disposé le plus prés possible de la surface de réception Q et que le point m soit placé sensiblement au dessus du point M. De plus, le guide fil est orienté de manière à ce que la tangente à l'orifice de projection 40 au point m fasse un angle $\alpha$ avec la ligne médiane E.

Suivant les enseignements de ce qui précède il conviendrait de disposer le conduit rotatif 2 de manière à ce que la trace de l'intersection du plan de rotation P avec la surface de réception Q fasse un angle $\alpha$ avec la ligne médiane E, puis de calculer la hauteur h des parois de manière à ce que les limites $C_1$ et $C_2$ soient comprises dans l'ouverture 41 de la bordure supérieure du guide fil. Ceci conduit, en raison de la forme particulière de l'orifice de projection, à une augmentation importante de la hauteur h des parois des déflecteurs, ce qui entraîne, comme on l'a déjà vu, une perte d'énergie cinétique du fil en raison des frottements ou des chocs sur les parois des déflecteurs.

Il a été observé qu'il était possible de réduire sensiblement cet inconvénient en faisant tourner le conduit rotatif autour du point m d'un angle $\delta$ supplémentaire par rapport à la ligne L, de sorte que le plan P intersecte la trace longitudinal de l'orifice de projection à proximité des extrémités 44 et 45 du guide fil, ainsi qu'au point m où ledit plan P est tangent à ladite trace. La trace de l'orifice de projection est la ligne imaginaire passant à équidistance des bordures des parois des déflecteurs 42, 43 au niveau de l'orifice de projection 40. Elle correspond à la ligne de contact entre les parois lorsque la distance e est égale à zéro.

Il ne reste plus alors qu'à déterminer la forme et les hauteurs des déflecteurs en appliquant les règles énoncées dans les paragraphes qui précèdent, et en tenant compte de l'amplitude de l'oscillation du fil, dont la valeur est obtenue par des mesures expérimentales à l'aide des moyens décrits ci-dessus. La hauteur des parois est alors réduite au maximum possible, ainsi que la perte d'énergie cinétique du fil au passage dans le guide fil.

La présente description concerne la configuration dans laquelle le tronçon de fil posé fait un S de part et d'autre de la ligne L. On observera qu'il est également possible de déposer des tronçons de fils pouvant prendre des formes variées autour de la ligne L et non rectiligne une fois posés sur la surface de réception Q. L'homme du métier pourra alors adapter l'orientation du guide fil par rapport à cette ligne L de manière à ce que les deux droites $C_1$ et $C_2$ qui délimitent les amplitudes de l'oscillation du fil de part et d'autre du plan de rotation P soient inscrites dans l'orifice d'entrée 41 du guide fil.

Une autre application concerne la possibilité tirer partie des différentes alternatives évoquées ci-dessus dans le but de déterminer une gamme de guide fil ayant des géométries adaptées à la pose de fils de nature et de longueur différentes, ou ayant des amplitudes d'oscillation différentes bien que proches. Ceci permet, en ajustant de manière judicieuse le choix des valeurs d'angle et de hauteur en fonction de la gamme de produit à fabriquer, de limiter le nombre de guide fil nécessaire pour la fabrication d'une grande variété de dimensions et de fils.

## Revendications

**1.** Dispositif de fabrication d'un renforcement à partir d'un fil (1) déposé directement à sa place finale en projetant des tronçons (10) dudit fil sur une surface de réception (Q), ledit dispositif comprenant

   - des moyens d'appel (11) de fil (1) à partir d'une source de fil,
   - un conduit rotatif (2) fixé sur un arbre (20) constituant l'axe de rotation (R) dudit conduit, de manière telle que l'extrémité radiale extérieure (21) dudit conduit soit orientée sensiblement radialement par rapport à l'axe de rotation, ledit conduit recevant le fil (1) par son extrémité centrale (22) opposée à ladite extrémité radiale extérieure (21) en provenance desdits moyens d'appel, ledit fil sortant par ladite extrémité radiale extérieure, lesdits moyens d'appel contrôlant la vitesse linéaire d'avance du fil à l'intérieur dudit conduit rotatif,
   - des moyens pour entraîner en rotation ledit conduit rotatif,
   - des moyens pour sectionner le fil agissant sur le fil de façon à libérer un tronçon à chaque tour dudit conduit rotatif,
   - un guide fil (4) pour recevoir et guider les tronçons de fil composé de deux déflecteurs (42, 43) positionnés par rapport au conduit rotatif (2) de façon à recevoir le tronçon de fil dans le plan de rotation (P) du conduit rotatif, les dits déflecteurs délimitant un dégagement intérieur allongé, placé dans ledit plan de rotation (P), de façon à dégager entre eux une fente comportant un orifice d'entrée (41) et un orifice de projection (40) au travers desquels le tronçon de fil (10) peut passer, et étant disposés de manière à ce que l'écartement entre chaque déflecteur aille en se rétrécissant au fur et à mesure que l'on se rapproche de l'orifice de projection en faisant entre eux un angle donné $\theta$,

   **caractérise en ce que** ledit angle $\theta$ est compris en-

tre 3° et 7°.

2. Dispositif selon la revendication 1, dans lequel l'angle θ formé par les déflecteurs (42, 43) est sensiblement constant.

3. Dispositif selon la revendication 1 dans lequel l'angle θ formé par les déflecteurs (42, 43) diminue le long de la hauteur desdits déflecteurs au fur et à mesure que l'on se rapproche de l'orifice de projection 40.

4. Dispositif selon la revendication 1, dans lequel l'angle θ formé par les déflecteurs (42, 43) augmente lorsque l'on se déplace dans la direction longitudinale du guide fil depuis l'extrémité radialement interne (44) du guide fil (4) vers l'extrémité radialement externe (45) du guide fil (4).

5. Dispositif selon l'une des revendications 1 à 4, dans lequel la hauteur h des parois des déflecteurs (42, 43) est déterminée de manière à ce que l'écartement (W) des déflecteurs au niveau de l'orifice d'entrée (41) soit supérieur à la valeur (a) de l'oscillation du fil de part et d'autre du plan de rotation (P).

6. Dispositif selon la revendication 5, dans lequel la hauteur (h) des parois des déflecteurs augmente lorsque l'on se déplace dans la direction longitudinale du guide fil depuis l'extrémité radialement interne du guide fil (44) vers l'extrémité radialement externe du guide fil (45).

7. Dispositif selon la revendication 5, dans lequel la hauteur (h) des parois des déflecteurs (42, 43) est sensiblement constante.

8. Dispositif selon l'une des revendications 1 à 7 dans lequel l'orifice de projection (40) a une forme sensiblement rectiligne dans sa direction longitudinale.

9. Dispositif selon la revendication 8, dans lequel le guide fil est disposé de manière à ce que le plan de rotation P passe par l'orifice de projection (40).

10. Dispositif selon l'une des revendications 1 à 9 dans lequel l'orifice de projection a une forme non rectiligne dans sa direction longitudinale.

11. Dispositif selon la revendication 10, dans lequel l'orifice de projection a une forme en S dans sa direction longitudinale.

12. Dispositif selon l'une des revendications 10 ou 11 dans lequel le guide fil est disposé de manière à ce que les lignes $C_1$ et $C_2$ qui délimitent les amplitudes de l'oscillation du fil de part et d'autre du plan de rotation P soient inscrites dans l'orifice d'entrée (41) dudit guide fil (4).

13. Dispositif selon la revendication 12 dans lequel le guide fil est disposé de manière à ce que le plan de rotation P soit tangent à la trace de l'orifice de projection en un point m sensiblement équidistant des extrémités 44 et 45 du guide fil, et intersecte l'orifice de projection (40) à proximité des dites extrémités.

14. Utilisation d'un dispositif selon l'une des revendications 1 à 13 pour la fabrication d'un pneumatique.

**Claims**

1. Device for manufacturing a reinforcement from a thread (1) laid directly in its final position by spraying lengths (10) of the said thread onto a receiving surface (Q), the said device comprising:

   - feed means (11) for feeding thread (1) from a source of thread,
   - a rotary conduit (2) fixed to a shaft (20) constituting the axis of rotation (R) of the said conduit, so that the outer radial end (21) of the said conduit is directed substantially radially with respect to the axis of rotation, the said conduit receiving the thread (1) via its central end (22), which is the opposite end to the said outer radial end (21), from the said feed means, the said thread leaving via the said outer radial end, the said feed means controlling the linear rate of advance of the thread inside the said rotary conduit,
   - means for rotating the said rotary conduit,
   - thread cutting means acting on the thread in such a way as to release a length for each revolution of the said rotary conduit,
   - a thread guide (4) for receiving and guiding the lengths of thread, made up of two deflectors (42, 43) which are positioned with respect to the rotary conduit (2) in such a way as to receive the length of thread in the plane of rotation (P) of the rotary conduit, the said deflectors delimiting an elongate interior opening, positioned in the said plane of rotation (P), so as to leave between them a slot comprising an inlet orifice (41) and a spray orifice (40), through which orifices the length of thread (10) can pass, and being positioned in such a way that the separation between the deflectors narrows towards the spray orifice, forming a given angle θ between them,

   **characterized in that** the said angle θ ranges between 3° and 7°.

2. Device according to Claim 1, in which the angle θ formed by the deflectors (42, 43) is substantially constant.

3. Device according to Claim 1, in which the angle θ formed by the deflectors (42, 43) decreases along the height of the said deflectors towards the spray orifice (40).

4. Device according to Claim 1, in which the angle θ formed by the deflectors (42, 43) increases in the longitudinal direction of the thread guide from the inner radial end (44) of the thread guide (4) towards the outer radial end (45) of the thread guide (4).

5. Device according to one of Claims 1 to 4, in which the height h of the walls of the deflectors (42, 43) is determined in such a way that the separation (W) of the deflectors at the inlet orifice (41) is greater than the value (a) of the oscillation of the thread on each side of the plane of rotation (P).

6. Device according to Claim 5, in which the height (h) of the walls of the deflectors increases in the longitudinal direction of the thread guide from the inner radial end of the thread guide (44) towards the outer radial end of the thread guide (45).

7. Device according to Claim 5, in which the height (h) of the walls of the deflectors (42, 43) is substantially constant.

8. Device according to one of Claims 1 to 7, in which the spray orifice (40) has a substantially straight shape in its longitudinal direction.

9. Device according to Claim 8, in which the thread guide is positioned in such a way that the plane of rotation P passes through the spray orifice (40).

10. Device according to one of Claims 1 to 9, in which the spray orifice has a non-rectilinear shape in its longitudinal direction.

11. Device according to Claim 10, in which the spray orifice has an S-shape in its longitudinal direction.

12. Device according to one of Claims 10 or 11, in which the thread guide is positioned in such a way that the lines $c_1$ and $c_2$ which delimit the amplitudes of the oscillation of the thread on each side of the plane of rotation P fall within the inlet orifice (41) of the said thread guide (4).

13. Device according to Claim 12, in which the thread guide is positioned in such a way that the plane of rotation P is tangential to the line of the spray orifice at a point m substantially mid-way between the ends 44 and 45 of the thread guide, and intersects the spray orifice (40) near the said ends.

14. Use of a device according to one of Claims 1 to 13 for manufacturing a tyre.

**Patentansprüche**

1. Vorrichtung zur Herstellung einer Verstärkung ausgehend von einem Draht (1), der direkt an seinem endgültigen Platz aufgebracht wird, indem Abschnitte (10) des Drahts auf eine Aufnahmefläche (Q) projiziert werden, wobei die Vorrichtung enthält

   - Einrichtungen (11) zum Abruf von Draht (1) ausgehend von einer Drahtquelle,
   - einen drehbaren Kanal (2), der auf einer die Drehachse (R) des Kanals bildenden Welle (20) derart befestigt ist, dass das radial äußere Ende (21) des Kanals bezüglich der Drehachse im Wesentlichen radial ausgerichtet ist, wobei der Kanal den Draht (1) über sein zentrales Ende (22) entgegengesetzt zum radial äußeren Ende (21) von den Abrufeinrichtungen kommend aufnimmt, wobei der Draht über das radial äußere Ende austritt, wobei die Abrufeinrichtungen die lineare Vorschubgeschwindigkeit des Drahts innerhalb des drehbaren Kanals steuern,
   - Einrichtungen, um den drehbaren Kanal in Drehung zu versetzen,
   - Einrichtungen zum Ablängen des Drahts, die so auf den Draht einwirken, dass sie bei jeder Drehung des drehbaren Kanals einen Abschnitt freigeben,
   - eine Drahtführung (4), um die Drahtabschnitte aufzunehmen und zu führen, die aus zwei Leitblechen (42, 43) besteht, welche bezüglich des drehbaren Kanals (2) so positioniert sind, dass sie den Drahtabschnitt in der Drehebene (P) des drehbaren Kanals aufnehmen, wobei die Leitbleche einen länglichen inneren Freiraum begrenzen, der in der Drehebene (P) angeordnet ist, um zwischen sich einen Schlitz freizulegen, der eine Eingangsöffnung (41) und eine Projektionsöffnung (40) aufweist, durch die hindurch der Drahtabschnitt (10) verlaufen kann, und so angeordnet sind, dass der Abstand zwischen jedem Leitblech abnimmt, je weiter man sich der Projektionsöffnung annähert, indem sie zwischen sich einen gegebenen Winkel θ bilden, **dadurch gekennzeichnet, dass** der Winkel θ zwischen 3° und 7° liegt.

2. Vorrichtung nach Anspruch 1, bei der der von den Leitblechen (42, 43) gebildete Winkel θ im Wesentlichen konstant ist.

3. Vorrichtung nach Anspruch 1, bei der der von den Leitbleche (42, 43) gebildete Winkel θ entlang der Höhe der Leitbleche abnimmt, je weiter man sich der Projektionsöffnung (40) annähert.

4. Vorrichtung nach Anspruch 1, bei der der von den Leitblechen (42, 43) gebildete Winkel θ in der Längsrichtung der Drahtführung vom radial inneren Ende (44) der Drahtführung (4) zum radial äußeren Ende (45) der Drahtführung (4) zunimmt.

5. Vorrichtung nach einem der Ansprüche 1, bis 4, bei der die Höhe (h) der Wände der Leitbleche (42, 43) so bestimmt wird, dass der Abstand (W) der Leitbleche in Höhe der Eingangsöffnung (41) größer als der Wert (a) der Schwingung des Drahts zu beiden Seiten der Drehebene (P) ist.

6. Vorrichtung nach Anspruch 5, bei der die Höhe (h) der Wände der Leitbleche in der Längsrichtung der Drahtführung vom radial inneren Ende (44) der Drahtführung zum radial äußeren Ende (45) der Drahtführung zunimmt.

7. Vorrichtung nach Anspruch 5, bei der die Höhe (h) der Wände der Leitbleche (42, 43) im Wesentlichen konstant ist.

8. Vorrichtung nach einem der Ansprüche 1 bis 7, bei der die Projektionsöffnung (40) in ihrer Längsrichtung eine im Wesentlichen geradlinige Form hat.

9. Vorrichtung nach Anspruch 8, bei der die Drahtführung so angeordnet ist, dass die Drehebene (P) durch die Projektionsöffnung (40) verläuft.

10. Vorrichtung nach einem der Ansprüche 1 bis 9, bei der die Projektionsöffnung in ihrer Längsrichtung eine nicht gradlinige Form hat.

11. Vorrichtung nach Anspruch 10, bei der die Projektionsöffnung in ihrer Längsrichtung eine S-Form hat.

12. Vorrichtung nach einem der Ansprüche 10 oder 11,bei der die Drahtführung so angeordnet ist, dass die Linien $c_1$ und $c_2$, die die Amplituden der Schwingungen des Drahts zu beiden Seiten der Drehebene (P) begrenzen, innerhalb der Eingangsöffnung (41) der Drahtführung (4) liegen.

13. Vorrichtung nach Anspruch 12, bei der die Drahtführung so angeordnet ist, dass die Drehebene (P) den Verlauf der Projektionsöffnung in einem Punkt m tangiert, der im Wesentlichen den gleichen Abstand von den Enden (44) und (45) der Drahtführung hat und die Projektionsöffnung (40) in der Nähe der Enden schneidet.

14. Verwendung einer Vorrichtung nach einem der Ansprüche 1 bis 13 zur Herstellung eines Luftreifens.

**Fig 1**

EP 1 938 958 B1

**Fig 2**

Fig 3

**Fig 4**

Q

M

L

α

E

10

**44**    **43**    **40**    **m**

**4**    **42**    **45**

**Fig 5**

Fig 6

EP 1 938 958 B1

**EP 1 938 958 B1**

**RÉFÉRENCES CITÉES DANS LA DESCRIPTION**

**Documents brevets cités dans la description**

- EP 248301 A
- EP 845348 A
- EP 845349 A